# EUROPEAN PATENT APPLICATION

(11) **EP 1 440 821 A1**
(43) Date of publication of application: **28.07.2004**
(21) Application number: 02775271.6
(22) Date of filing: 01.10.2002
(51) Int. Cl.: B60C 3/00, B60C 9/08, B60C 15/00, B60C 15/02

(54) **ASSEMBLY OF TIRE AND RIM, AND TIRE**

(30) Priority: 02.10.2001 JP 2001305977
(71) Applicant: Bridgestone Corporation, Tokyo 104-8340 (JP)
(72) Inventor: MASAOKA, Ken BRIDGESTONE CORPORATION Technical, Kodaira-shi, Tokyo 187-8531 (JP); HAGIWARA, Kazumasa BRIDGESTONE CORPORATION, Kodaira-shi, Tokyo 187-8531 (JP)
(74) Representative: Whalley, Kevin
(86) International application number: PCT/JP2002/010214
(87) International publication number: WO 2003/031206

(57) **Abstract**

An assembly of a tire and a rim, wherein the internal pressure of the tire acts so as to increase a belt tension at a belt layer (30) since the internal pressure directs to the outer radial direction of the tire at an increased width part (12) and, since the horizontal portions (14a) of drawn parts (14) are prevented from being swelled toward the center of the tire by the flange parts (22) of a rim (20), the drawn parts (14) are swelled toward the center of the tire, whereby, since a reduction in belt tension can be avoided to maintain the roundness of the belt layer (30) and thus a rolling resistance can be lowered.

## Description

### Technical Field

The present invention relates to a pneumatic tire which is low in rolling resistance.

### Background Art

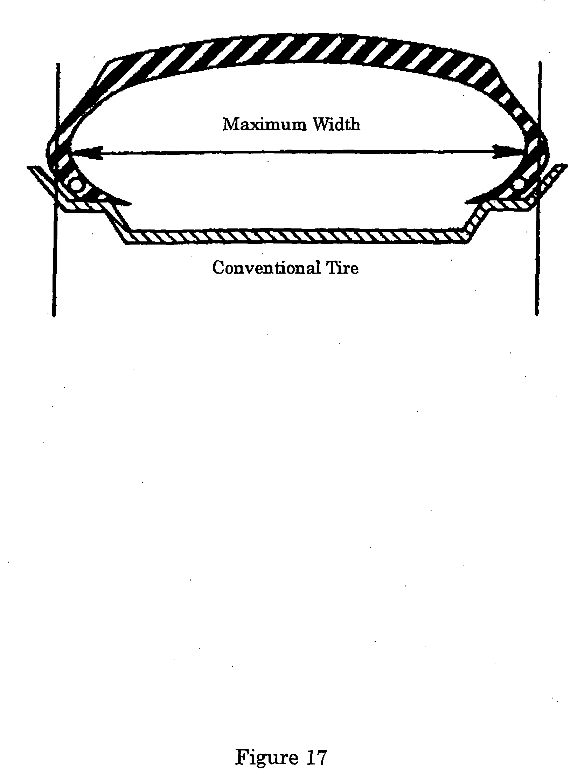

The shape of a conventional pneumatic tire is shown in Fig. 17. As shown in the same figure, the conventional pneumatic tire has a maximum width at vertically intermediate side portions thereof. By adopting such a shape wherein the radius of curvature of each side portion changes gently, each side portion has a tension induced by the internal air pressure of the tire.

In connection with a rolling resistance, it is generally known that a tire having a large value of Tb/Ts is better in terms of a relation between belt tension (Tb) and side tension (Ts) both based on air pressure. That is, a tire having a high belt tension and a low side tension is preferred for reducing a rolling resistance.

The reason is that, at a high belt tension, the roundness, which may also be designated roundness deviation, of a belt layer at a tire-ground contact portion is maintained during rolling of the tire under a load. While the roundness of the belt layer is maintained, a flexural deformation in the circumferential direction of the belt layer which causes the belt layer to change from a circular shape to a flat shape is small. Consequently, a shear strain deformation, which occurs between cross layers of an angle belt used in an ordinary radial tire, becomes smaller. This shear strain deformation between cross layers of a belt causes a delay in the occurrence of a stress during rolling, which is attributable to the fact that rubber sandwiched in between the cross layers or rubber present thereabouts possesses viscoelasticity, and this delay acts as a loss and as one cause of a rolling resistance.

Thus, deforming the belt layer so as to maintain the roundness of the same layer is one method for lowering a rolling resistance. Further, it is evident that making the value of Tb large and that of Ts small is desirable for attaining such a deformation.

For attaining such a tension distribution, various studies have so far been made about a sectional shape of a tire. For example, in Japanese Patent Laid-Open No. S52(1977)-79402 Publication there is a description on a sectional shape of a tire.

In the Japanese Patent Laid-Open No. S52(1977)-79402 publication there is described a structure wherein a maximum structure width of a wheel with a pneumatic tire lies in the vicinity of tire beads.

However, in the pneumatic tire structure disclosed in the Japanese Patent Laid-Open No. S52(1977)-79402 publication, a limit is made to the way of thinking that control is performed in terms of tension distribution, and therefore a lowering of a rolling resistance cannot be attained to a satisfactory extent.

Accordingly, it is an object of the present invention to provide an assembly of a tire and a rim, and a tire, capable of lowering a rolling resistance.

### Disclosure of Invention

According to the present invention as described in claim 1, a tire-rim assembly includes: a carcass ply having an increased width part and drawn parts, the increased width part increasing in width gradually from a maximum diameter portion of a tire toward the center of the tire, the drawn parts being contiguous to maximum width portions of the increased width part and becoming smaller in width than the maximum width portions; a rim adapted to prevent the drawn parts from swelling toward the center of the tire; and a belt layer having a cord disposed on an outer periphery of the carcass ply in a direction crossing the carcass ply.

In the tire-rim assembly constructed as above, the internal pressure of the tire directs radially outwards of the tire at an increased width part and therefore acts so as to increase the belt tension in the belt layer. Besides, since drawn parts are prevented by the rim from swelling toward the center of the tire, it is possible to prevent a lowering of belt tension which is caused by swelling of the drawn parts toward the center of the tire.

With a consequent increase of belt tension, the roundness, which may also be designated roundness deviation, at a tire-ground contact portion is maintained during rolling of the tire under a load. As a result, a rolling resistance of the tire-rim assembly is lowered.

The present invention as described in claim 2, is a tire-rim assembly according to claim 1, wherein the angle between the increased width part and each the drawn part is in the range of 30 to 75 degrees.

The present invention as described in claim 3, is a tire-rim assembly according to claim 1, wherein the drawn parts each have a substantially horizontal portion contiguous to the increased width part.

Te present invention as described in claim 4, is a tire-rim assembly according to claim 3, wherein the rim is in contact with substantially the whole of the horizontal portions of the drawn parts and has flange parts disposed on the center side of the tire with respect to the horizontal portions of the drawn parts.

According to the tire-rim assembly constructed as above, it is possible to prevent the drawn parts from swelling toward the center of the tire.

According to the present invention as described in claim 5, atire-rim assembly according to claim 3 or claim 4, further includes beads disposed at end portions of the carcass ply, and wherein the radius of curvature of each of first portions where the horizontal portions of the drawn parts and the increased width part are contiguous to each other and the radius of curvature of each of second portions where the horizontal portions of the drawn parts and the beads are contiguous to each other, are extremely small in comparison with the maximum diameter of the tire, and the center of curvature radius of each of the first portions lies inside the carcass ply, while the center of curvature radius of each of the second portions lies outside the carcass ply.

According to the tire-rim assembly constructed as above, since first and second portions are small in the radius of curvature, a flexural deformation is concentrated thereon, whereby it is possible to maintain the roundness of the belt layer, thus leading to a lowering of a rolling resistance.

Besides, since the first portions are deformed outside the carcass ply with the second portions as fulcrums, it is possible to ensure a sufficient space for flexural deformation.

The present invention as described in claim 6, is a tire-rim assembly according to claim 5, wherein the increased width part has a maximum diameter part having a diameter almost equal to the maximum diameter and connection parts for connection between the maximum diameter part and the drawn parts, and the belt layer is disposed so as to extend along the maximum diameter part and so as not to extend along the connection parts.

The present invention as described in claim 7, is a tire-rim assembly according to claim 6, wherein the portion of the belt layer disposed so as not to extend along the maximum diameter part faces the outside of the tire with respect to the maximum diameter part.

According to the present invention as described in claim 8, a tire-rim assembly according to claim 3, further includes beads disposed radially inwards of the tire with respect to the horizontal portions, and wherein the drawn parts each have a bead winging portion, the bead winding portion passing inside of the associated one of the beads in the tire width direction, then passing inside of the bead in the radial direction of the tire, further passing outside of the bead in the tire width direction, and being disposed along the associated one of the horizontal portions.

According to the present invention as described in claim 9, a tire-rim assembly according to claim 3, further includes beads disposed radially inwards of the tire with respect to the horizontal portions, and wherein the drawn parts each have a bead winding portion, the bead winding portion passing outside of the associated one of the beads in the tire width direction, then passing inside of the bead in the radial direction of the tire, and further passing inside of the bead in the tire width direction, and being disposed along the associated one of the horizontal portions.

According to the present invention as described in claim 10, a tire-rim assembly according to claim 3, further includes a hard member, the hard member being disposed in an area from each of the horizontal portions up to a height, the height being smaller than one-third of the height from the maximum width portion of the increased width part to the outermost portion of the tire.

The present invention as described in claim 11, is a tire-rim assembly according to claim 5, wherein the hard member is disposed in each of the second portions.

According to the present invention as described in claim 12, a tire-rim assembly according to claim 11, further includes a hard member, the hard member being disposed in an area from each of the horizontal portions up to a height, the height being smaller than one-third of the height from the maximum width portion of the increased width part to the outermost portion of the tire, the hard member being independent of the hard member disposed in each of the second portions.

According to the present invention as described in claim 13, a tire-rim assembly according to claim 3, further includes an expansion suppressing member for suppressing a radial expansion of the tire, the expansion suppressing member being disposed in an area from each of the horizontal portions up to a height, the height being smaller than one-third of the height from the maximum width portion of the increased width part to the outermost portion of the tire.

According to the present invention as described in claim 14, a tire includes: a carcass ply, the carcass ply having an increased width part and drawn parts, the increased width part increasing in width from a maximum diameter portion of the tire toward the center of the tire, the drawn parts decreasing in width from a maximum width portion of the increased width part; and a belt layer having a cord disposed on an outer periphery of the carcass ply in a direction crossing the carcass ply, wherein the drawn parts are prevented from swelling toward the center of the tire.

The present invention as described in claim 15, is a tire according to claim 14, wherein the angle between the increased width part and each the drawn part is in the range of 30 to 75 degrees.

The present invention as described in claim 16, is a tire according to claim 14, wherein the drawn parts each have a substantially horizontal portion contiguous to the increased width part.

According to the present invention as described in claim 17, a tire according to claim 16, further includes beads disposed at end portions of the carcass ply, and wherein the radius of curvature of each of first portions where the horizontal portions of the drawn parts and the increased width part are contiguous to each other and the radius of curvature of each of second portions where the horizontal portions of the drawn parts and the beads are contiguous to each other, are extremely small in comparison with the maximum diameter of the tire, and the center of curvature radius of each of the first portions lies inside the carcass ply, while the center of curvature radius of each of the second portions lies outside the carcass ply.

The present invention as described in claim 18, is a tire according to claim 17, wherein the increased width part has a maximum diameter part having a diameter almost equal to the maximum diameter and connection parts for connection between the maximum diameter part and the drawn parts, and the belt layer is disposed so as to extend along the maximum diameter part and so as not to extend along the connection parts.

The present invention as described in claim 19, is a tire according to claim 18, wherein the portion of the belt layer disposed so as not to extend along the maximum diameter part faces the outside of the tire with respect to the maximum diameter part.

According to the present invention as described in claim 20, a tire according to claim 16, further includes beads disposed radially inwards of the tire with respect to the horizontal portions, and wherein the drawn parts each have a bead winging portion, the bead winding portion passing inside of the associated one of the beads in the tire width direction, then passing inside of the bead in the radial direction of the tire, further passing outside of the bead in the tire width direction, and being disposed along the associated one of the horizontal portions.

According to the present invention as described in claim 21, a tire according to claim 16, further includes beads disposed radially inwards of the tire with respect to the horizontal portions, and wherein the drawn parts each have a bead winding portion, the bead winding portion passing outside of the associated one of the beads in the tire width direction, then passing inside of the bead in the radial direction of the tire, and further passing inside of the bead in the tire width direction, and being disposed along the associated one of the horizontal portions.

According to the present invention as described in claim 22, a tire according to claim 16, further includes a hard member, the hard member being disposed in an area from each of the horizontal portions up to a height, the height being smaller than one-third of the height from the maximum width portion of the increased width part to the outermost portion of the tire.

The present invention as described in claim 23, is a tire according to claim 17, wherein the hard member is disposed in each of the second portions.

According to the present invention as described in claim 24, a tire according to claim 23, further includes a hard member, the hard member being disposed in an area from each of the horizontal portions up to a height, the height being smaller than one-third of the height from the maximum width portion of the increased width part to the outermost portion of the tire, the hard member being independent of the hard member disposed in each of the second portions.

According to the present invention as described in claim 25, a tire according to claim 16, further includes an expansion suppressing member for suppressing a radial expansion of the tire, the expansion suppressing member being disposed in an area from each of the horizontal portions up to a height, the height being smaller than one-third of the height from the maximum width portion of the increased width part to the outermost portion of the tire.

### Brief Description of Drawings

Fig. 1 is a radial sectional view of a tire-rim assembly 1 according to the first embodiment.
Fig. 2 is an enlarged view of the carcass ply 10 in the vicinity of the drawn parts 14.
Fig. 3 illustrates an internal pressure of a conventional tire (Fig. 3(a)) and that of the tire of the first embodiment (Fig. 3(b)).
Fig. 4 shows shapes of the tire of the first embodiment both in a load-free condition and a loaded condition of the tire.
Fig. 5 shows shapes of the tires of the Examples, wherein Figs. 5(a), 5(b), and 5(c) illustrate the tires of Examples 1, 2, and 3, respectively.
Fig. 6 illustrates a load-free condition of an air-inflated tire 2 (the tire shape is determined by the internal pressure of the tire) and a loaded condition of the tire, wherein Fig. 6(a) illustrates a conventional tire 2 which has a maximum width at an approximately intermediate position of side portions, while Fig. 6(b) illustrates the tire 2 according to the first embodiment.
Fig. 7 is a sectional view in a radial direction of a tire 2 according to a second embodiment of the present invention, showing a horizontal state of a belt layer 30 (Fig. 7(a)) and a jumped-up state of the belt layer (Fig. 7(b)).
Fig. 8(a) represents a vector of a force acting on an inner surface of the tire 2 in the first embodiment (the force acting when the tire is charged with air), and Fig. 8(b) shows how the tire 2 is deformed upon operation thereon of such a force as shown in Fig. 8(a).
Fig. 9 shows a deformed state of the tire 2 under a lateral force applied thereto by turning a steering wheel.
Fig. 10 shows beads 16 and the vicinity thereof in the carcass ply 10 used in the first embodiment, wherein Fig. 10(a) shows a state before the tire is charged with air, and wherein Fig. 10(b) shows a state after the tire has been charged with air.
Fig. 11 illustrates beads 16 and the vicinity thereof in a carcass ply 10 according to the third embodiment, wherein Fig. 11(a) shows a state before the tire is charged with air, and wherein Fig. 11(b) shows a state after the tire has been charged with air.
Fig. 12 is a explanatory drawing of RZ shear.
Fig. 13 illustrates beads 16 and the vicinity thereof in the carcass ply 10 according to this fourth embodiment, wherein Fig. 13(a) shows a state before the tire is charged with air, and wherein Fig. 13(b) shows a state after the tire has been charged with air.
Fig. 15 is a schematic sectional view in a radial direction of a tire 2 according to a fifth embodiment of the present invention.
Fig. 16 illustrates states of deformation of the tire 2 in the absence (Fig. 16(a)) and presence (Fig. 16(b)) of the expansive deformation suppressing member 50.
Fig. 17 is a radial sectional view showing the shape of a conventional pneumatic tire.

### Best Mode for Carrying Out the Invention

Embodiments of the present invention will be described hereinunder with reference to the accompanying drawings.

### First Embodiment

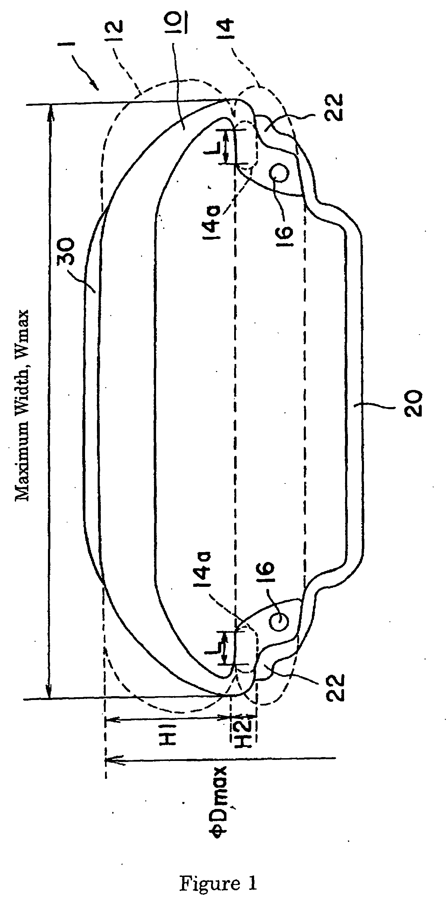

The construction of a first embodiment of the present invention will now be described. Fig. 1 is a radial sectional view of a tire-rim assembly 1 according to the first embodiment. The tire-rim assembly 1 has a carcass ply 10, a rim 20, and a belt layer 30.

The carcass ply 10 has an increased width part 12, drawn parts 14, and beads 16.

The increased width part 12 increases in width from a maximum diameter Dmax portion of the tire toward the center of the tire, and becomes maximum in width, Wmax, at its end portions.

The drawn parts 14 are contiguous to the maximum width portions of the increased width part 12 and become smaller in width gradually from the maximum width portions. The drawn parts 14 have horizontal portions 14a respectively. The horizontal portions 14a are substantially horizontal portions contiguous to the end portions of the increased width part 12. The horizontal portions 14a may be horizontal or may have a small angle. It is preferable that the length L of each horizontal portion 14a be 0.01 Wmax or more.

The beads 16 are provided at end portions of the carcass ply 10.

The rim 20, to which the carcass ply 10 is attached, prevents the drawn parts 14 from swelling toward the center of the tire. The rim 20 has flange parts 22. The flange parts 22 are in contact with substantially the whole areas of the horizontal portions 14a of the drawn parts 14. Besides, the flange parts 22 are disposed on the center side of the tire with respect to the horizontal portions 14a of the drawn parts 14. However, the flange parts 22 may be located near or in contact with second portions 17 which will be described later.

At each of the portions where the increased width portion 12 takes the maximum width Wmax, the height H2 thereof from the associated flange part 22 is smaller than the height H1 from the maximum width Wmax portion to the maximum diameter portion Dmax of the tire. Preferably, the ratio of H2/H1 is 0.3 or less.

In the belt layer 30, a cord is disposed on an outer periphery of the carcass ply 10 in a direction crossing the carcass ply.

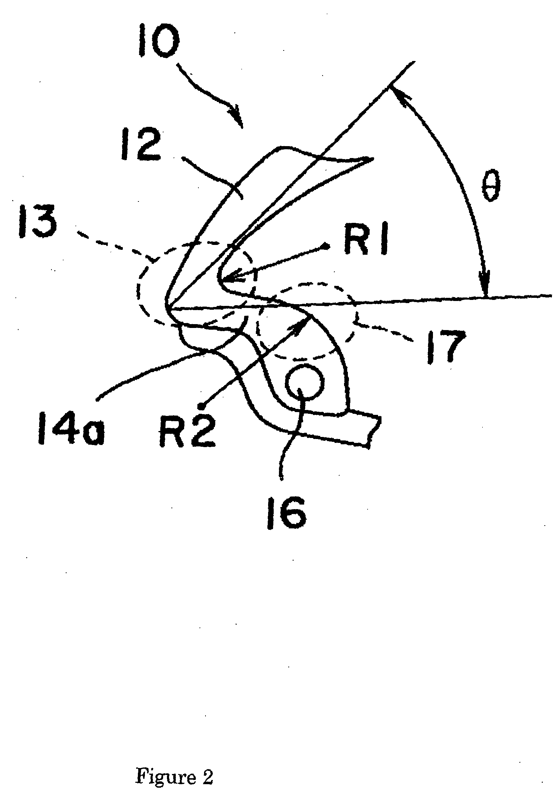

Fig. 2 is an enlarged view of the carcass ply 10 in the vicinity of the drawn parts 14. The horizontal portion 14a of each drawn part 14 and the increased width part 12 are contiguous to each other at a first portion 13. The horizontal portion 14a of each drawn part 14 and the associated bead 16 are contiguous to each other at the associated second portion 17. A radius of curvature R1 of the first portion 13 and a radius of curvature R2 of the second portion 17 are extremely small in comparison with the maximum diameter Dmax of the tire. It is preferable that R1 and R2 be each 0.07Dmax/2 or less. A curvature radius center of the first portion 13 lies in the interior of the carcass ply 10 and that of the second portion 17 lies in the exterior of the carcass ply. In the vicinity of the first portion 13, the angle θ between the associated drawn part 14 and the increased width part 12 is preferably 90° or less.

It is particularly preferable that the angle θ be in the range of 30° to 75°. If the angle θ is smaller than 30°, the carcass 10 is apt to rupture due to deflection under a load. If the angle θ exceeds 75°, the effect of decreasing the rolling resistance is not exhibited to a satisfactory extent because the easiness of bending (a lowering of side tension Ts) is insufficient. Thus, if the angle θ is in the range of 30° to 75°, the carcass ply 10 is difficult to rupture and the effect of decreasing the rolling resistance remains outstanding.

Next, a description will be given below about the operation of the first embodiment.

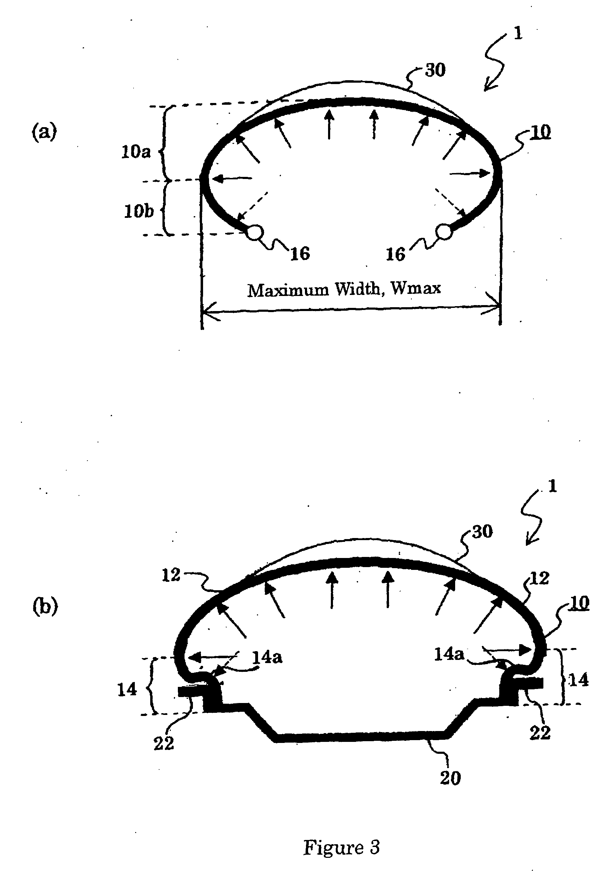

Fig. 3 illustrates an internal pressure of a conventional tire (Fig. 3(a)) and that of the tire of the first embodiment (Fig. 3(b)). The tire is generally filled with air and an internal pressure is developed.

In the conventional tire, as shown in Fig. 3(a), at a portion 10a (the upper side in Fig. 3(a)) located outside the maximum width Wmax portion in the carcass ply 10, an internal pressure of the tire acts in directions indicated by solid-line arrows. As is apparent from Fig. 3(a), the internal pressure of the tire causes the belt layer 30 to swell radially outwards of the tire. This leads to increasing the belt tension in the belt layer 30. At a high belt tension, the roundness, which may also be designated roundness deviation, at the tire-ground contact portion is maintained during rolling of the tire under a load. Consequently, the rolling resistance of the tire-rim assembly is decreased.

Also in the tire of the first embodiment of the present invention, as shown in Fig. 3(b), an internal pressure imposed on the increased width part 12 of the carcass ply 10 acts in directions indicated by solid-line arrows. Thus, the internal pressure of the tire causes the belt layer 30 of the tire to swell radially outwards of the tire. This also leads to increasing the belt tension in the belt layer 30.

In the conventional tire, however, for bead portions 10b (the lower side in Fig. 3(a)) located inside the maximum width Wmax portion in the carcass ply 10, the internal pressure of the tire acts in directions indicated by dotted-line arrows. As is apparent from Fig. 3(a), the internal pressure of tire causes the belt layer 30 of the tire to swell radially inwards of the tire (downward in Fig. 3(a)). This leads to decreasing the belt tension in the belt layer 30, which is an obstacle to attaining a lowering in rolling resistance of the tire-rim assembly.

On the other hand, in the tire of the first embodiment of the present invention, as shown in Fig. 3(b), the internal pressure imposed on the drawn parts 14 of the carcass ply 10 acts in directions indicated by dotted-line arrows. However, the horizontal portions 14a of the drawn parts 14 are prevented by the flange parts 22 of the rim 20 from swelling radially inwards of the tire (downward in Figs. 3(b)). More specifically, the second portion 17 on the left lower side (the right lower side) in Fig. 3(b) is pushed to the left lower side (the right lower side) with the internal pressure indicated by a dotted-line arrow. In this case, if the associated flange part 22 is not present, the shape of the horizontal portion 14a is no longer horizontal. However, since the flange part 22 is in contact with substantially the whole area of the horizontal portion 14a and is located near or in contact with the second portion 17, the shape of the horizontal portion 14a is kept horizontal and hence a decrease of belt tension in the belt layer 30 is prevented. Consequently, a lowering in rolling resistance of the tire-rim assembly is not obstructed.

To prevent deformation of the second portions 17, the second portions may be formed of a hard member instead of using the flange parts 22. The hard member is, for example, such a hard rubber as satisfies the relationship of 0.5<E<3.5 wherein E stands for an elastic modulus (kg/mm²). In the case where a greater importance is attached to restraint of the second portions 17 for maintaining the shape of the horizontal portions 14a horizontal, there also may be used a bead-like member.

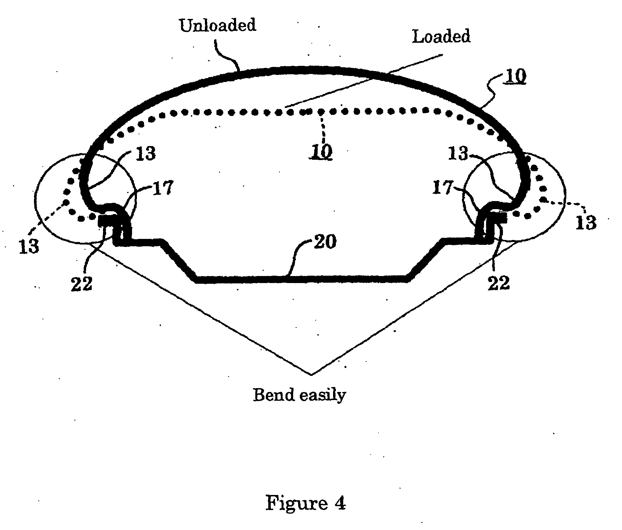

Fig. 4 shows shapes of the tire of the first embodiment both in a load-free condition and a loaded condition of the tire. The first and second portions 13, 17 are positioned near the flange parts 22. In the drawings which follow, the belt layer 30 is omitted its illustration. Thus, even when the tire is charged with air and an internal pressure is developed, deformation of the tire is suppressed by the flange parts 22, so that the radius of curvature of the first portions 13 and that of the second portions 17 remain extremely small in comparison with the maximum diameter Dmax of the tire. The dotted line in Fig. 4 represents a loaded shape of the tire. When a load is imposed on the tire, the first portions 13 are deformed inwards (downwards in Fig. 4) with the second portions 17 as fulcrums, so that flexural deformations under a load are concentrated near the first and second portions 13, 17. Consequently, as the deformation of the tire as a whole, the roundness in the circumferential direction of the belt can be maintained. Besides, since the first portions 13 are positioned outside the second portions 17 in the width direction, a flexural deformation of the first portions 13 under a load is performed outside the carcass ply 10, thus ensuring a sufficient space for the deformation.

According to this first embodiment, in the increased width part 12, the internal pressure of the tire directs radially outwards of the tire and hence acts to increase the belt tension in the belt layer 30. Moreover, since the horizontal portions 14a of the drawn parts 14 are prevented by the flange parts 22 of the rim 20 from swelling toward the center of the tire, it is possible to prevent a lowering of belt tension which is caused by swelling of the drawn parts 14 toward the tire center.

Accordingly, with an increase of belt tension, the roundness, which also may be designated roundness deviation, at the tire-ground contact portion is maintained during rolling under a load of the tire. Thus, a lowering in rolling resistance of the tire-rim assembly results.

Further, since the radii of curvature R1, R2 of the first and second portions 13, 17 are small, flexural deformations are concentrated on both portions when the tire is loaded, whereby the roundness of the belt layer 30 can be retained, thus leading to a lowering of rolling resistance.

Additionally, since the first portions 13 are deformed outside the carcass ply 10 with the second portions 17 as fulcrums, it is possible to ensure a sufficient space for flexural deformations.

### EXAMPLES

The following tires are presented as Examples 1, 2, and 3.
Example 1 : L = 0.04 Wmax, R1 = 0.06R (R stands for a maximum radius of tire, R = Dmax/2), R2 = 0.07R, θ = 45°, H2/H1 = 0.27
Example 2: L = 0.04 Wmax, R1 = 0.02R, R2 = 0.07R, θ = 45°, H2 = -6 mm, H1 = 70 mm
Example 3 : L = 0.12 Wmax, R1 = 0.02R, R2 = 0.07R, θ = 35°, H2/H1 = 0.27

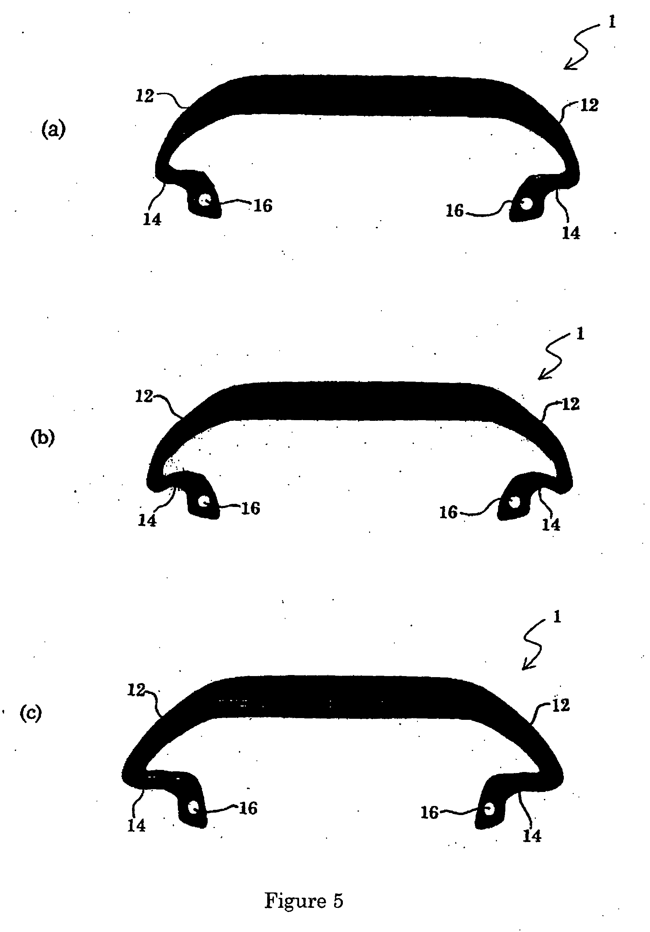

Fig. 5 shows shapes of the tires of the Examples. More specifically, Figs. 5(a), 5(b), and 5(c) illustrate the tires of Examples 1, 2, and 3, respectively, provided the rim 20 is not shown.

Table 1 below compares rolling resistance coefficients of the tires of the Examples and a conventional tire.

**Table 1**

| | Rolling Resistance Coefficient | Index |
|---|---|---|
| Conventional Tire | 0.0093 | 100 |
| Example 1 | 0.0045 | 48 |
| Example 2 | 0.0046 | 49 |
| Example 3 | 0.0047 | 51 |

In the above table, the index represents a resistance coefficient of each tire, assuming that the rolling resistance coefficient of the conventional tire is 100.

Also from the above results of comparison it is seen that the tires according to the first embodiment of the present invention are effective in reducing the rolling resistance.

### Second Embodiment

A second embodiment of the present invention is different in the layout of belt layer 30 from the first embodiment.

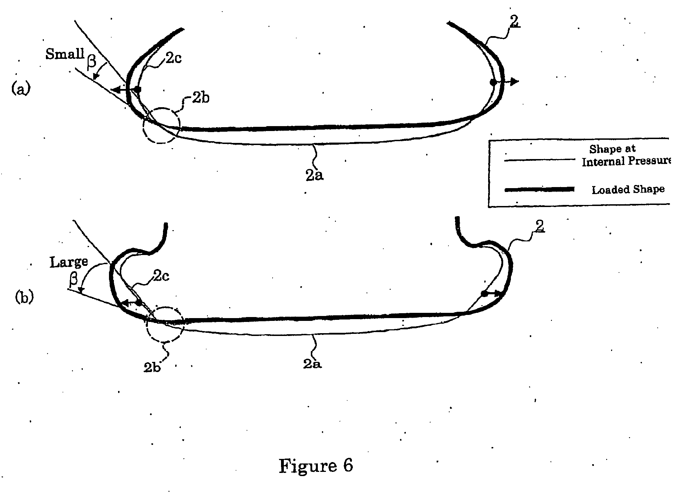

Fig. 6 illustrates a load-free condition of an air-inflated tire 2 (the tire shape is determined by the internal pressure of the tire) and a loaded condition of the tire. In the same figure, Fig. 6(a) illustrates a conventional tire 2 which has a maximum width at an approximately intermediate position of side portions, while Fig. 6(b) illustrates the tire 2 according to the first embodiment.

As shown in Fig. 6(a), when the conventional tire 2 is loaded, it swells largely in the vicinity of the maximum width as compared with the load-free condition. Therefore, shoulder portions 2b located at ends of a maximum diameter part 2a which is generally horizontal in the load-free condition are not so largely deformed flexurally even when the conventional tire 2 is loaded. In Fig. 6(a), the amount of flexural deformation of each shoulder part 2b is shown in terms of angle β, which angle β is small. Therefore, even if the belt layer 30 is disposed along the maximum diameter part 2a and is allowed to extend along side parts 2c beyond the shoulder parts 2b, there is no fear that the belt layer 30 may become easier to rupture.

In the first embodiment, however, there arises a problem if the belt layer 30 is disposed along the side parts 2c beyond the shoulder parts 2b as in the conventional tire. More particularly, when a load is imposed on the tire 2 of the first embodiment, as shown in Fig. 6(b), the tire 2 swells to a larger extent near the shoulder parts 2b than in a load-free condition. As a result, a large flexural deformation occurs in each shoulder part 2b. In Fig. 6(b), the amount of the flexural deformation in each shoulder part 2b is represented in terms of angle β, which angle β is larger than in Fig. 6(a). Thus, if the belt layer 30 is disposed along the side parts 2c beyond the shoulder parts 2b, the belt layer is apt to rupture. It follows that the tire can withstand only a shorter running distance than in the case of the conventional tire.

This second embodiment can solve the problem involved in the case where the belt layer 30 in the first embodiment is disposed as in the conventional tire.

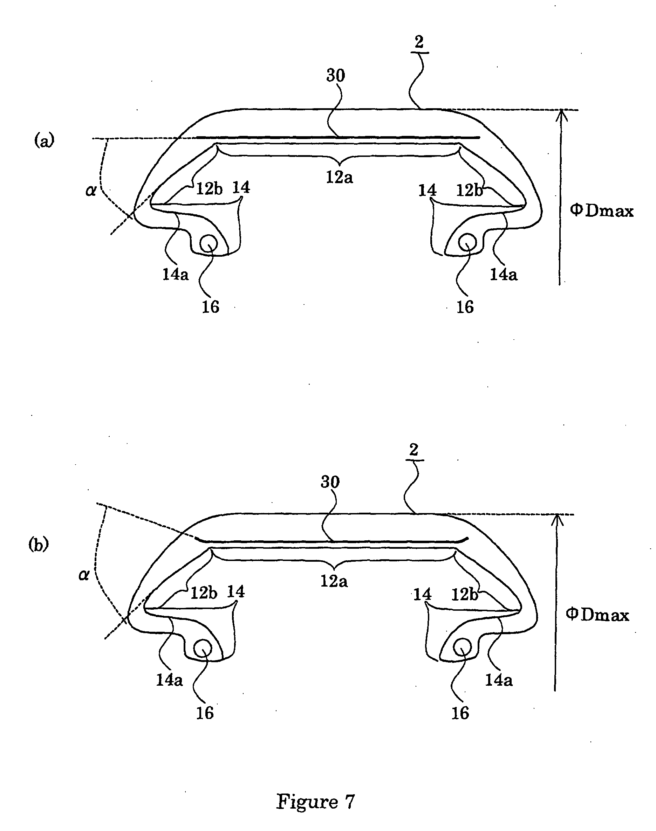

Fig. 7 is a radial sectional view of a tire 2 according to the second embodiment. The tire 2 of the second embodiment is provided with a carcass ply 10, a rim 20 (not shown), and a belt layer 30. The same portions as in the first embodiment will be identified by the same reference numerals as in the first embodiment and explanations thereof will be omitted.

The tire 2 has a rubber layer which covers the carcass ply 10 from above. Although Fig. 1 omits illustration of a rubber layer which covers the carcass ply and the belt layer, Fig. 7 illustrates such a rubber layer. In Fig. 7, the carcass ply 10 is illustrated thinner than in Fig. 1 so that the tire does not become too large in Fig. 7. Thus, the shape of the carcass ply 10 in Fig. 7 appears to be somewhat different from that of the carcass ply 10 in Fig. 1, but there essentially is no difference between the two.

The carcass ply 10 has an increased width part 12, drawn parts 14, and beads 16.

The increased width part 12 has a maximum diameter part 12a and connection parts 12b. The maximum diameter part 12a has a diameter almost equal to the maximum diameter Dmax of the tire and is substantially horizontal. The connection parts 12b provide connections between the maximum diameter part 12a and the drawn parts 14. The drawn parts 14 and the beads 16 are the same as in the first embodiment.

The rim 20 is the same as in the first embodiment although it is not shown in Fig. 7.

In the belt layer 30, a cord is disposed on an outer periphery of the carcass ply 10 in a direction crossing the carcass ply 10. As shown in Fig. 7(a), the belt layer 30 extends horizontally along the maximum diameter part 12a, not extending along the connection parts 12b. That is, the belt layer 30 makes a certain angle α (e.g., α = 30°) relative to the connection parts 12b. Alternatively, as shown in Fig. 7(b), the portion of the belt layer 30 not extending along the maximum diameter part 12a may be directed toward the outside of the tire with respect to the maximum diameter part 12a. That is, the belt layer 30 is jumped up at its end portions. For example, α = 40°.

The operation of the second embodiment will now be described. The tire 2 when loaded swells to a larger extent near shoulder parts 2b than in a load-free condition. The belt layer 30 is at a certain angle a relative to the connection parts 12b and is therefore difficult to be influenced by large flexural deformations in the shoulder parts 2b.

According to this second embodiment, the belt layer 30 can avoid the portions which undergo large flexural deformations in the vicinity of the shoulder parts 2b, and is therefore difficult to rupture.

### EXAMPLES

Table 2 below shows the results of a durability test conducted for the conventional tire (see Fig. 6(a)), the tire of the first embodiment, the tire of the second embodiment (α = 30°, see Fig. 7(a)), and the tire of the second embodiment (α = 40°, see Fig. 7(b)). In the same table, the durability index represents a value on the running distance of the tire 2 until rupture of the belt layer 30 at predetermined load and internal pressure, and the larger the value, the better.

**Table 2**

| | Durability Index |
|---|---|
| Conventional Tire | 100 |
| Tire of the first embodiment | 20 |
| Tire of the second embodiment (α = 30°) | 100 |
| Tire of the second embodiment (α = 40°) | 98 |

As is apparent from Table 2, the easiness of rupture of the belt layer 30 in the tire of the first embodiment is remedied by the second embodiment and there is attained the difficulty of rupture like that of the conventional tire.

### Third Embodiment

In this third embodiment, the shape of end portions of a carcass ply 10 used therein is different from that in the first embodiment.

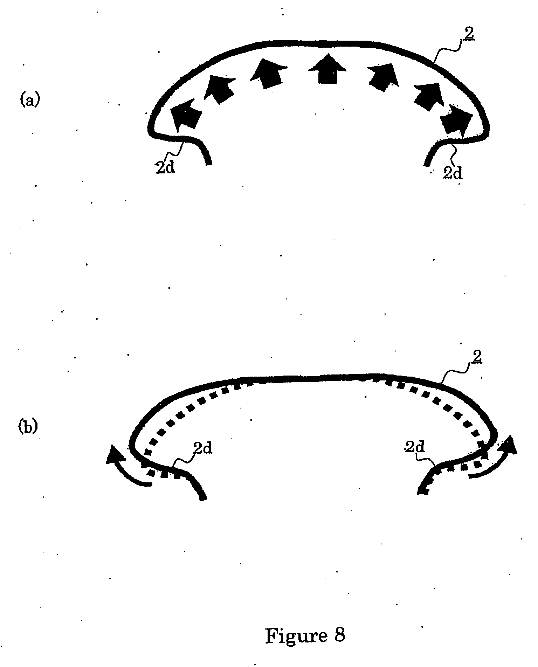

Fig. 8(a) represents a vector of a force acting on an inner surface of the tire 2 in the first embodiment (the force acting when the tire is charged with air), and Fig. 8(b) shows how the tire 2 is deformed upon operation thereon of such a force as shown in Fig. 8(a). Dotted and solid lines represent a state before deformation and a state after deformation, respectively. As shown in Fig. 8(a), the tire 2 of the first embodiment undergoes a radially outward force, so that horizontal portions 2d (corresponding to the horizontal portions 14a of the carcass ply 10) of the tire 2 are deformed radially outwards, as shown in Fig. 8(b). As a result, the rolling resistance of the tire 2 increases and a shear force is exerted on the horizontal portions 2d.

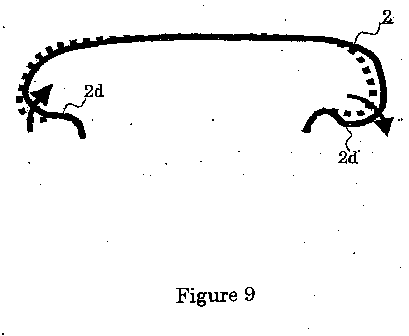

Fig. 9 shows a deformed state of the tire 2 under a lateral force applied thereto by turning a steering wheel, in which dotted and solid lines represent a state before deformation and a state after deformation, respectively. As shown in Fig. 9, the horizontal portions 2d of the tire 2 rise or fall, so that the lateral rigidity of the tire is deteriorated and the driving stability becomes worse.

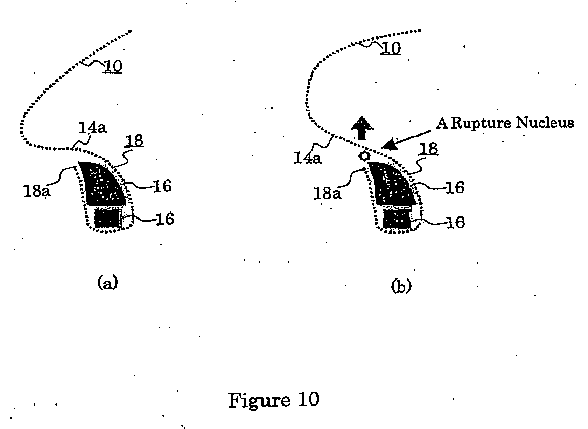

Fig. 10 shows beads 16 and the vicinity thereof in the carcass ply 10 used in the first embodiment, in which Fig. 10(a) shows a state before the tire is charged with air. In the vicinity of the beads, the carcass ply 10 has a bead winding portion 18 disposed between the associated horizontal portion 14a and an end portion 18a. The bead winding portion 18 passes the right-hand side of the beads 16 (inside in the width direction of the tire 2), then passes below the beads 16 (inside in the radial direction of the tire 2), and further passes the left-hand side of the beads 16 (outside in the width direction of the tire 2). Lastly, the end portion 18a of the bead winding portion 18 is disposed near the horizontal portion 14a. Fig. 10(b) shows a state after the tire has been charged with air. Since the horizontal portion 14a deforms radially outwards of the tire 2, the tire ruptures in the vicinity of the end portion 18a.

Such a deformation of a horizontal portion 2d of the tire 2 caused by the application of a radially outward or lateral force to the tire 2 poses a problem.

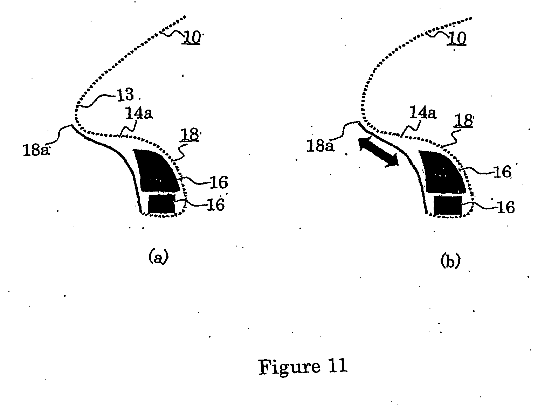

The third embodiment intends to prevent the deformation of each horizontal portion 2d in the tire 2 of the first embodiment. Fig. 11 illustrates beads 16 and the vicinity thereof in a carcass ply 10 according to the third embodiment. Other portions of the tire 2 are the same as in the first or the second embodiment and are therefore not shown.

Fig. 11(a) shows a state before the tire is charged with air. In the vicinity of the beads, the carcass ply 10 has a bead winding portion 18 disposed between a horizontal portion 14a and an end portion 18a. The bead winding portion 18 passes the right-hand side of the beads 16 (inside in the width direction of the tire 2), then passes below the beads 16 (inside in the radial direction of the tire 2), and further passes the left-hand side of the beads 16 (outside in the width direction of the tire 2). The bead winding portion 18 is disposed below the horizontal portion 14a (inside in the radial direction of the tire 2) along the horizontal portion 14a, and the end portion 18a is disposed near a first portion 13 somewhat beyond the horizontal portion 14a.

The operation of the third embodiment will be described below.

Fig. 11(b) shows a state after the tire has been charged with air. The horizontal portion 14a tends to deform radially outwards of the tire 2. However, a force is exerted in the directions of arrows on the portion where the bead winding portion 18 is disposed along the horizontal portion 14a. This portion tends to contract against the force acting in the arrowed directions, thus suppressing deformation of the horizontal portion 14a. Also when a force is exerted sideways on the tire 2, the horizontal portion 14a tends to deform. Also in this case, the portion where the bead winding portion 18 is disposed along the horizontal portion 14a gives an anti-deformation force to the horizontal portion 14a, so that deformation of the horizontal portion 14a is suppressed.

Thus, according to this third embodiment, deformation of the each horizontal portion 2d of the tire 2 caused by the exertion of a radially outward or lateral force on the tire can be suppressed by the portion where the bead winding portion 18 is disposed along the horizontal portion 14a.

### EXAMPLES

Table 3 shows the results of having measured how deformation of each horizontal portion 2d was suppressed with respect to a case where each end portion of the carcass ply 10 was wound normally round the beads 16 (normal winding) (see Fig. 10(a), this third embodiment, a case where a cord of a high elastic modulus (e.g., 90° layer, non-woven cloth) was disposed outside the carcass ply 10 in the normal winding (normal winding + cord), and a case where a cord (intra-section parallel cord (0°)) was disposed near the end portion 18a inside or outside the carcass ply 10 in the third embodiment (third embodiment + cord).

**Table 3**

| | RRC | Cross Spring | Longitudinal Spring | Main Strain | RZ Shear Strain |
|---|---|---|---|---|---|
| Normal Winding | 100 | 100 | 100 | 100 | 100 |
| Third Embodiment | 97.7 | 127.4 | 105.9 | 80.0 | 77.4 |
| Normal Winding + Cord | 99.5 | 127.5 | 105.2 | 88.3 | 90.7 |
| Third Embodiment + Cord | 101.2 | 130.5 | 106.2 | 75.0 | 84.1 |

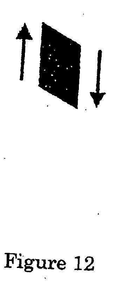

As to the main strain and RZ shear strain, there were adopted largest values in an area as a cracked area from the first portion 13 to the second portion 17. RZ shear indicates an intra-section shear (see Fig. 12). Assuming that each coefficient in the normal winding was 100, coefficients in the other cases were determined.

According to the third embodiment, spring constants are larger and strains are smaller than in the normal winding, thus proving that a deformation suppressing effect is exhibited. From a comparison between the normal winding + cord and the third embodiment + cord it is seen that the third embodiment + cord is larger in spring constant and smaller in strain and is thus more effective in suppressing deformation. Thus, third embodiment proves to be effective in suppressing deformation. A comparison between the normal winding (the third embodiment) and the normal winding + cord (the third embodiment + cord) shows that the presence of a cord is more effective in suppressing deformation.

As to RRC (Rolling Resistance Coefficient), there is no significant difference between the normal winding and the third embodiment, as well as the third embodiment + cord, thus proving that the third embodiment does not exert no bad influence on RRC.

### Fourth Embodiment

In this fourth embodiment, the shape of end portions of a carcass ply 10 used therein is different from that in the third embodiment.

In the carcass ply 10 used in the third embodiment, a shear force is developed in the portion where the bead winding portion 18 is disposed along the horizontal portion 14a (see Fig. 11(b)), and the durability of the said portion is deteriorated.

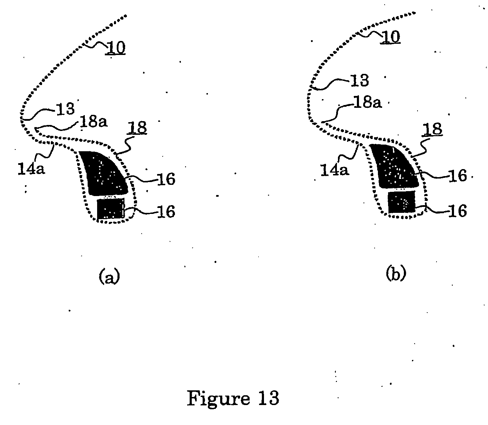

This fourth embodiment intends to improve the durability of each end portion (located near a horizontal portion 14a) of a carcass ply 10. Fig. 13 illustrates beads 16 and the vicinity thereof in the carcass ply 10 according to this fourth embodiment. As to the tire 2 and other portions, they are not shown because they are the same as in the third embodiment.

Fig. 13(a) shows a state before the tire is charged with air. In the vicinity of the beads, the carcass ply 10 has a bead winding portion 18 extending from the horizontal portion 14a up to an end portion 18a. The bead winding portion 18 passes the left-hand side of beads 16 (outside in the width direction of the tire 2), then passes below the beads 16 (inside in the radial direction of the tire 2), and further passes on the right-hand side of the beads 16 (inside in the width direction of the tire 2). Further, the bead winding portion 18 is disposed above the horizontal portion 14a (outside in the radial direction of the tire 2) along the horizontal portion, and the end portion 18a is disposed near a first portion 13 somewhat beyond the horizontal portion 14a.

Next, a description will be given below of the operation of the fourth embodiment.

Fig. 13(b) shows a state after the tire has been charged with air. The horizontal portion 14a tends to deform radially outwards of the tire 2. At this time, a very large force does not act on the portion where the bead winding portion 18 is disposed along the horizontal portion 14a.

According to this fourth embodiment, since a very large force is not exerted on the portion where the bead winding portion 18 is located along the upper side of the horizontal portion 14a, the durability of the said portion increases to a greater extent than in the third embodiment.

### EXAMPLES

Table 4 shows the results of having measured how deformation of each horizontal portion 2d was suppressed with respect to a case where each end portion of the carcass ply 10 was wound normally round the beads 16 (normal winding) (see Fig. 10(a)), a case where the end portion 18a was located radially inwards (at a lower position) of the tire relative to the horizontal portion 14a in the fourth embodiment (low turn-up), a case where the end portion 18a was located radially outwards (at a higher position) of the tire relative to the first portion 13 (high turn-up), a combination of both low turn-up and spiral addition (low turn-up + spiral addition), and a combination of both high turn-up and spiral addition (high turn-up + spiral addition). The "spiral" indicates a cord-reinforced layer (added to the turn-up portion (end portion 18a)) with cord wound in the circumferential direction of the tire.

**Table 4**

| | RRC | Cross Spring | Longitudinal Spring | Main Strain | RZ Shear Strain |
|---|---|---|---|---|---|
| Normal Winding | 100.0 | 100.0 | 100.0 | 100.0 | 100.0 |
| Low Turn-up | 94.6 | 77.1 | 96.8 | 66.7 | 86.3 |
| High Turn-up | 98.6 | 100.0 | 101.0 | 64.0 | 78.4 |
| Low Turn-up + Spiral Addition | 104.5 | 118.7 | 99.4 | 60.0 | 68.6 |
| High Turn-up + Spiral Addition | 105.5 | 131.1 | 103.4 | 53.3 | 64.7 |

As to the main strain and RZ shear strain, there were adopted largest values in an area as a cracked area from the first portion 13 to the second portion 17. RZ shear indicates an intra-section shear. Assuming that each coefficient in the normal winding was 100, coefficients in the other cases were determined.

As a whole, in comparison with the normal winding, a strain suppressing effect is recognized and this fourth embodiment proves to be effective in the suppression of strain.

### Fifth Embodiment

According to this fifth embodiment, in an increased width part 12 of a carcass ply 10 used therein, a hard rubber layer is formed relatively radially inwards of a tire of the same embodiment. This point is different from the first and second embodiments.

When the steering wheel is turned and a lateral force is applied to the tire 2, the tire 2 in each of the first and second embodiments deforms in such a manner as has been explained above in connection with Fig. 9. As shown in Fig. 9, a horizontal portion 2d of the tire 2 rises or falls, so that the lateral rigidity of the tire is deteriorated and the driving stability becomes worse.

According to this fifth embodiment, when the steering wheel is turned and a lateral force is applied to the tire 2 in the first and second embodiment, the horizontal portions 2d of the tire 2 are prevented from deformation.

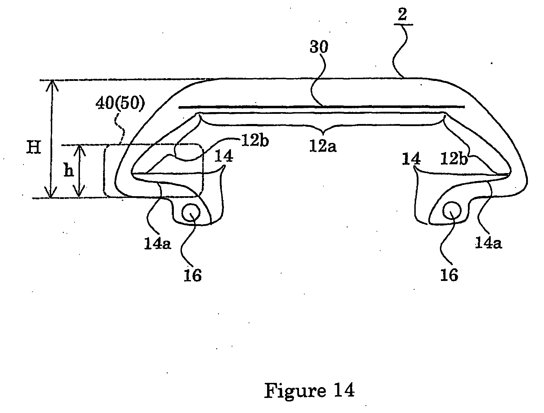

Fig. 14 is a radial sectional view of a tire 2 according to this fifth embodiment. This tire 2 is provided with a carcass ply 10, a rim 20 (not shown), a belt layer 30, and a hard rubber layer 40. As to other portions which are the same as in the first and second embodiments, they are identified by the same reference numerals as in the first and second embodiments, and explanations thereof will be omitted.

The carcass ply 10, rim 20 (not shown), and belt layer 30 are the same as in the first and second embodiments. The hard rubber layer 40 is disposed outside each horizontal portion 14a and connection part 12b in the width direction of the tire. Of importance is that the hard rubber layer 40 is disposed in only the range from the portion where an increased width part 12 contacts a flange part 22 up to a height lower than the height indicated at h. The height h is represented as h = (1/3) x H, where H represents a height from the portion where the increased width part 12 contacts the flange portion 22 up to the maximum diameter Dmax portion of the tire. The hard rubber layer 40 is formed of a material which satisfies the relationship of 0.5<E<3.5, assuming that the elastic modulus is E (kg/mm²).

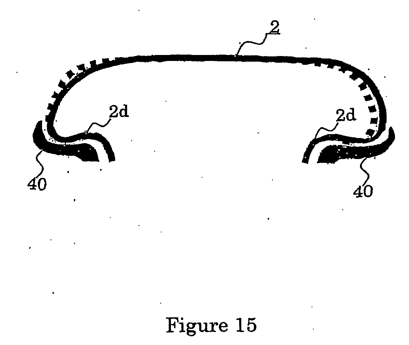

Schematically, the hard rubber layer 40 is disposed as shown in Fig. 15.

In the first embodiment it has been described that a hard member is disposed in each second portion 17. In case of disposing a hard member in each second portion 17, it is preferable that the hard member and the hard rubber layer 40 be disposed independently of each other.

A description will now be given of the operation of the fifth embodiment. When the steering wheel is turned sideways, the tire 2 tends to deform as in Fig. 9. However, deformation of each horizontal portion 2d is suppressed by the hard rubber layer 40.

According to this fifth embodiment, since deformation of each horizontal portion 2d is suppressed, the lateral rigidity of the tire 2 is improved and so is the driving stability.

### EXAMPLES

Table 5 shows the results of having measured how deformation of each horizontal portion 2d was suppressed with respect to (1) a case where the hard rubber layer 40 was disposed between each end portion 18a and the associated first portion 13 in the third embodiment (see Fig. 11), (2) a case where the hard rubber layer 40 was disposed inside in the tire width direction relative to the carcass ply 10 in the third embodiment, (3) a case where the hard rubber layer 40 was disposed outside in the tire width direction relative to each end portion 18a in the third embodiment, (4) the hard rubber layer 40 was disposed near each first portion 13, and (5) the first embodiment (the hard rubber layer 40 is not disposed at any position higher than the horizontal portion 14a (radially outside of the tire)).

**Table 5**

| | RRC | Cross Spring | Longitudinal Spring | Main Strain | RZ Shear Strain |
|---|---|---|---|---|---|
| (1) | 106.6 | 127.6 | 106.0 | 66.7 | 76.7 |
| (2) | 102.7 | 135.0 | 99.5 | 83.3 | 81.4 |
| (3) | 104.0 | 92.7 | 100.3 | 50.0 | 67.4 |
| (4) | 102.5 | 110.4 | 101.7 | 96.7 | 104.7 |
| (5) | 100 | 100 | 100 | 100 | 100 |

As to the main strain and RZ shear strain, there were adopted largest values in an area as a cracked area from the first portion 13 to the second portion 17. RZ shear indicates an intra-section shear. Assuming that each coefficient in the above (5) was 100, coefficients in the other cases were determined.

Particularly in the above (1) to (3), spring constants are large and strains are small, and thus a deformation suppressing effect is recognized.

As to RRC (Rolling Resistance Coefficient), there is no great difference between (1)-(4) and (5) which is the first embodiment, thus proving that the fifth embodiment exerts no bad influence on RRC.

### Sixth Embodiment

In this sixth embodiment an expansive deformation suppressing member 50 for suppressing a radial expansive deformation of tire is used instead of the hard rubber layer 40 used in the fifth embodiment.

The construction of the sixth embodiment is the same as that of the fifth embodiment (see Fig. 14). However, the expansive deformation suppressing member 50 is, for example, non-extension 90°, spiral, non-woven cloth, cross layer, or bead, and it is disposed at one or more positions.

The operation of the sixth embodiment will be described below.

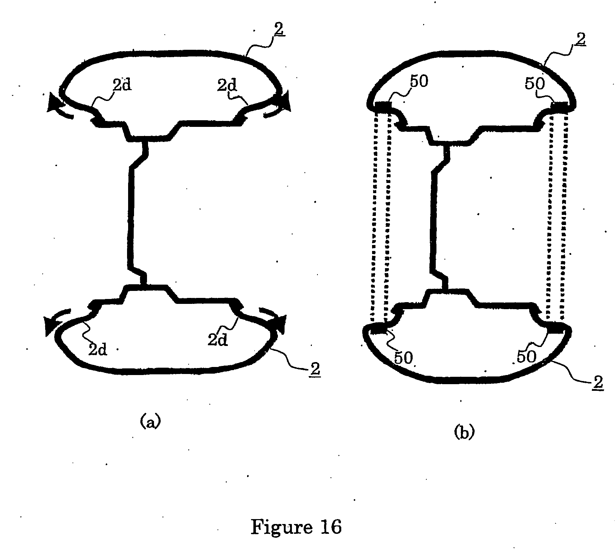

Fig. 16 illustrates states of deformation of the tire 2 in the absence (Fig. 16(a)) and presence (Fig. 16(b)) of the expansive deformation suppressing member 50.

As shown in Fig. 16(a), in the absence of the expansive deformation suppressing member 50, the horizontal portions 2d of the tire 2 undergo a rising deformation, i.e., a radially outward deformation of the tire. On the other hand, as shown in Fig. 16(b), in the presence of the expansive deformation suppressing member 50, there arises a state as if a "hoop" were fitted in the horizontal portions 2d, whereby a rising deformation of the horizontal portions 2d is suppressed.

Thus, according to this sixth embodiment, it is possible to suppress a rising deformation of the horizontal portions 2d of the tire 2.

### EXAMPLES

Table 6 shows the results of having measured how deformation of each horizontal portion 2d was suppressed with respect to (0) a normal tire (see Fig. 6(a)), (1) a case where the expansive deformation suppressing member 50 was disposed inside in the tire width direction relative to the carcass ply 10 in the third embodiment (see Fig. 11), (2) a case where the expansive deformation suppressing member 50 was disposed between each end portion 18a and the associated first portion 13 in the third embodiment, (3) a case where the expansive deformation suppressing member 50 was disposed outside in the tire width direction relative to each end portion 18a in the third embodiment, (4) a case where the expansive deformation suppressing member 50 was disposed in each horizontal portion 2d, (5) a case where the expansive deformation suppressing member 50 was disposed in each first portion 13, and (6) a case where the expansive deformation suppressing member 50 was disposed in both horizontal portion 2d and first portion 13.

**Table 6**

| | RRC | Cross Spring | Longitudinal Spring | Main Strain | RZ Shear Strain |
|---|---|---|---|---|---|
| (0) | 100 | 100 | 100 | 100 | 100 |
| (1) | 101.1 | 108.1 | 101.2 | 100 | 101.8 |
| (2) | 101.3 | 110.5 | 101.1 | 80.0 | 84.1 |
| (3) | 101.5 | 119.1 | 100.8 | 50.0 | 77.4 |
| (4) | 100.5 | 102.1 | 100.5 | 91.7 | 95.1 |
| (5) | 100.5 | 106.2 | 100.6 | 96.7 | 99.6 |

As to the main strain and RZ shear strain, there were adopted largest values in an area as a cracked area from the first portion 13 to the second portion 17. RZ shear indicates an intra-section shear. Assuming that each coefficient in the above (0) was 100, coefficients in the other cases were determined.

Particularly in the above (1) to (5), spring constants are large and strains are small, and thus a deformation suppressing effect is recognized.

As to RRC (Rolling Resistance Coefficient), there is no great difference between (1)-(4) and (5) which is the first embodiment, thus proving that the fifth embodiment exerts no bad influence on RRC.

According to the present invention, in the increased width part, the internal pressure of the tire directs radially outwards of the tire and therefore acts to increase the belt tension in the belt layer. Besides, since the drawn parts are prevented by the rim from swelling toward the center of the tire, it is possible to prevent a lowering of belt tension which is caused by swelling of the drawn parts toward the center of the tire.

Since the belt tension thus becomes high, the roundness, which may also be designated roundness deviation at the tire-ground contact portion is maintained during rolling of the tire under a load. Consequently, the rolling resistance of the tire-rim assembly is decreased.

## Claims

1. A tire-rim assembly comprising:
a carcass ply having an increased width part and drawn parts, said increased width part increasing in width gradually from a maximum diameter portion of a tire toward the center of said tire, said drawn parts being contiguous to maximum width portions of said increased width part and becoming smaller in width than said maximum width portions;
a rim adapted to prevent said drawn parts from swelling toward the center of the tire; and
a belt layer having a cord disposed on an outer periphery of said carcass ply in a direction crossing said carcass ply.

2. A tire-rim assembly according to claim 1, wherein the angle between said increased width part and each said drawn part is in the range of 30 to 75 degrees.

3. A tire-rim assembly according to claim 1, wherein said drawn parts each have a substantially horizontal portion contiguous to said increased width part.

4. A tire-rim assembly according to claim 3, wherein said rim is in contact with substantially the whole of the horizontal portions of said drawn parts and has flange parts disposed on the center side of the tire with respect to the horizontal portions of said drawn parts.

5. A tire-rim assembly according to claim 3 or claim 4, further comprising beads disposed at end portions of said carcass ply, and wherein the radius of curvature of each of first portions where the horizontal portions of said drawn parts and said increased width part are contiguous to each other and the radius of curvature of each of second portions where the horizontal portions of said drawn parts and said beads are contiguous to each other, are extremely small in comparison with the maximum diameter of the tire, and the center of curvature radius of each of said first portions lies inside said carcass ply, while the center of curvature radius of each of said second portions lies outside said carcass ply.

6. A tire-rim assembly according to claim 5, wherein said increased width part has a maximum diameter part having a diameter almost equal to said maximum diameter and connection parts for connection between said maximum diameter part and said drawn parts, and said belt layer is disposed so as to extend along said maximum diameter part and so as not to extend along said connection parts.

7. A tire-rim assembly according to claim 6, wherein the portion of said belt layer disposed so as not to extend along said maximum diameter part faces the outside of the tire with respect to the maximum diameter part.

8. A tire-rim assembly according to claim 3, further comprising beads disposed radially inwards of the tire with respect to said horizontal portions, and wherein said drawn parts each have a bead winging portion, said bead winding portion passing inside of the associated one of said beads in the tire width direction, then passing inside of the bead in the radial direction of the tire, further passing outside of the bead in the tire width direction, and being disposed along the associated one of said horizontal portions.

9. A tire-rim assembly according to claim 3, further comprising beads disposed radially inwards of the tire with respect to said horizontal portions, and wherein said drawn parts each have a bead winding portion, said bead winding portion passing outside of the associated one of said beads in the tire width direction, then passing inside of the bead in the radial direction of the tire, and further passing inside of the bead in the tire width direction, and being disposed along the associated one of said horizontal portions.

10. A tire-rim assembly according to claim 3, further comprising a hard member, said hard member being disposed in an area from each of said horizontal portions up to a height, said height being smaller than one-third of the height from the maximum width portion of said increased width part to the outermost portion of the tire.

11. A tire-rim assembly according to claim 5, wherein said hard member is disposed in each of said second portions.

12. A tire-rim assembly according to claim 11, further comprising a hard member, said hard member being disposed in an area from each of said horizontal portions up to a height, said height being smaller than one-third of the height from the maximum width portion of said increased width part to the outermost portion of the tire, said hard member being independent of the hard member disposed in each of said second portions.

13. A tire-rim assembly according to claim 3, further comprising an expansion suppressing member for suppressing a radial expansion of the tire, said expansion suppressing member being disposed in an area from each of said horizontal portions up to a height, said height being smaller than one-third of the height from the maximum width portion of said increased width part to the outermost portion of the tire.

14. A tire comprising:
a carcass ply, said carcass ply having an increased width part and drawn parts, said increased width part increasing in width from a maximum diameter portion of the tire toward the center of the tire, said drawn parts decreasing in width from a maximum width portion of said increased width part; and
a belt layer having a cord disposed on an outer periphery of said carcass ply in a direction crossing the carcass ply,
wherein said drawn parts are prevented from swelling toward the center of the tire.

15. A tire according to claim 14, wherein the angle between said increased width part and each said drawn part is in the range of 30 to 75 degrees.

16. A tire according to claim 14, wherein said drawn parts each have a substantially horizontal portion contiguous to said increased width part.

17. A tire according to claim 16, further comprising beads disposed at end portions of said carcass ply, and wherein the radius of curvature of each of first portions where the horizontal portions of said drawn parts and said increased width part are contiguous to each other and the radius of curvature of each of second portions where the horizontal portions of said drawn parts and said beads are contiguous to each other, are extremely small in comparison with the maximum diameter of the tire, and the center of curvature radius of each of said first portions lies inside said carcass ply, while the center of curvature radius of each of said second portions lies outside said carcass ply.

18. A tire according to claim 17, wherein said increased width part has a maximum diameter part having a diameter almost equal to said maximum diameter and connection parts for connection between said maximum diameter part and said drawn parts, and said belt layer is disposed so as to extend along said maximum diameter part and so as not to extend along said connection parts.

19. A tire according to claim 18, wherein the portion of said belt layer disposed so as not to extend along said maximum diameter part faces the outside of the tire with respect to the maximum diameter part.

20. A tire according to claim 16, further comprising beads disposed radially inwards of the tire with respect to said horizontal portions, and wherein said drawn parts each have a bead winging portion, said bead winding portion passing inside of the associated one of said beads in the tire width direction, then passing inside of the bead in the radial direction of the tire, further passing outside of the bead in the tire width direction, and being disposed along the associated one of said horizontal portions.

21. A tire according to claim 16, further comprising beads disposed radially inwards of the tire with respect to said horizontal portions, and wherein said drawn parts each have a bead winding portion, said bead winding portion passing outside of the associated one of said beads in the tire width direction, then passing inside of the bead in the radial direction of the tire, and further passing inside of the bead in the tire width direction, and being disposed along the associated one of said horizontal portions.

22. A tire according to claim 16, further comprising a hard member, said hard member being disposed in an area from each of said horizontal portions up to a height, said height being smaller than one-third of the height from the maximum width portion of said increased width part to the outermost portion of the tire.

23. A tire according to claim 17, wherein said hard member is disposed in each of said second portions.

24. A tire according to claim 23, further comprising a hard member, said hard member being disposed in an area from each of said horizontal portions up to a height, said height being smaller than one-third of the height from the maximum width portion of said increased width part to the outermost portion of the tire, said hard member being independent of the hard member disposed in each of said second portions.

25. A tire according to claim 16, further comprising an expansion suppressing member for suppressing a radial expansion of the tire, said expansion suppressing member being disposed in an area from each of said horizontal portions up to a height, said height being smaller than one-third of the height from the maximum width portion of said increased width part to the outermost portion of the tire.
